Europäisches Patentamt

European Patent Office

Office européen des brevets

(19)

(11) Numéro de publication: **0 010 034**
**B1**

(12) **FASCICULE DE BREVET EUROPEEN**

(45) Date de publication du fascicule du brevet: **06.10.82**

(51) Int. Cl.³: **B 62 D 57/02** //G21C17/00

(21) Numéro de dépôt: **79400679.1**

(22) Date de dépôt: **25.09.79**

(54) **Véhicule apte à se déplacer avec adhérence sur une surface quelconque.**

(30) Priorité: **29.09.78 FR 7827905**

(43) Date de publication de la demande:
**16.04.80 Bulletin 80/8**

(45) Mention de la délivrance du brevet:
**06.10.82 Bulletin 82/40**

(84) Etats contractants désignés:
**DE GB IT NL**

(56) Documents cités:
**FR - A - 2 259 419**

(73) Titulaire: **COMMISSARIAT A L'ENERGIE
ATOMIQUE Etablissement de Caractère
Scientifique Technique et Industriel
B.P. 510
F-75752 Paris Cedex 15 (FR)**

(72) Inventeur: **Danel, François
17, Les Ruelles Le Temple
F-41100 Vendome (FR)**
Inventeur: **Nicollet, Henri
65, rue Douy Delcupe
F-93100 Montreuil (FR)**
Inventeur: **Marchal, Paul
1-13, Résidence du Château de Courcelles
F-91190 Gif-sur-Yvette (FR)**
Inventeur: **Robin, Marc
7, Square d'Angervillier
F-78120 Rambouillet (FR)**
Inventeur: **Vertut, Jean
3, rue Voisembert
F-92130 Issy-les-Moulineaux (FR)**

(74) Mandataire: **Mongrédien, André et al,
c/o Brevatome 25, rue de Ponthieu
F-75008 Paris (FR)**

Courier Press, Leamington Spa, England.

Véhicule apte à se déplacer avec adhérence sur une surface quelconque

La présente invention a pour objet un véhicule apte à se déplacer par adhérence sur une surface quelconque.

De façon plus précise, la présente invention concerne un véhicule motorisé qui peut se déplacer sur une paroi ayant une forme quelconque. Cette surface peut être gauche; elle peut présenter des courbures différentes selon la direction; elle peut encore comporter des discontinuités telles que des arêtes ou des ouvertures.

Les principaux véhicules connus utilisent généralement des roues ou des chenilles en appui continu et de ce fait présentent des limitations dans un certain nombre de cas pour se déplacer sur des surfaces relativement complexes, soit par la courbure de ces surfaces, soit par leur orientation. Une illustration d'un véhicule de ce type apparaît dans le brevet FR—A—2 259 419. Les différents animaux se déplacent en présentant en permanence un certain nombre de points d'appui par leurs pattes et en présentant ces pattes de façon discontinue en appuis successifs. Ceci présente des avantages, en particulier lorsque la déambulation est réalisée sur une surface verticale ou opposée à l'effet de la pesanteur lorsqu'alors l'extrémité des pattes maintient son adhérence par un effet de crochets ou de ventouses.

L'invention concerne des véhicules procédant de la sorte sans recourir néanmoins à une structure reasemblant directement à celles des insectes ou des quadrupèdes. Les véhicules selon l'invention visent à la déambulation sur des surfaces quelconques. Ils peuvent s'appuyer sur lesdites surfaces de façon très homogène par un grand nombre de patins d'appui adhérant avec égalisation des forces d'appui sur les différents patins. Afin de pouvoir se déplacer sur des surfaces présentant des pentes importantes ou même verticales ou en surplomb, les patins d'appui possèdent des éléments adhérents.

Ces véhicules sont essentiellement prévus pour se déplacer sur des surfaces qui ne sont pas directement accessibles à l'homme, soit en raison du faible espace laissé disponible, soit en raison du milieu défavorable à l'homme ou éventuellement pour déplacer un homme sur de telles parois. De tels véhicules peuvent être utilisés dans différentes installations industrielles. Ces applications se présentent en particulier dans le cas des installations nucléaires et plus précisément pour le contrôle et l'intervention sur les cuves de réacteurs nucléaires, par exemple du type à neutrons rapides refroidis par du métal liquide. Ces véhicules peuvent alors déplacer, soit des appareils d'observation, par exemple pour contrôler régulièrement des soudures par voie visuelle (caméras de télévision) ou par des capteurs ultrasoniques ou électromagnétiques.

Celui qui est familiarisé avec les réacteurs nucléaires à neutrons rapides refroidis par un métal liquide sait que la cuve principale est entourée par une cuve de sûreté, l'espace annulaire laissé entre ces deux cuves étant très réduit. Une des applications du véhicule objet de l'invention, est d'inspecter ces cuves en se déplaçant dans cet aspace annulaire.

L'invention concerne un véhicule caractérisé en ce qu'il comprend:

— un corps central définissant un axe de pivotement qui reste sensiblement perpendiculaire à une surface et qui comporte deux ensembles de patins centraux d'appui adhérents sur ladite surface, les deux ensembles étant disposés symétriquement par rapport audit axe de pivotement;

— un premier et un deuxième chariots munis chacun de deux ensembles de patins d'appui d'extrémité adhérents;

— un premier et un deuxième organes de guidage en translation rectiligne sans rotation des premier et deuxième chariots selon deux directions restant sensiblement orthogonales audit axe de pivotement, les deux ensembles de patins d'extrémité associés à un même chariot étant disposés symétriquement par rapport à un plan, d'une part, contenant ou parallèle à l'axe de translation rectiligne et d'autre part contenant l'axe de pivotement et reliés audit chariot par des bras;

— des moyens de déplacement pour actionner indépendamment lesdits premier et deuxième chariots le long desdits organes de guidage;

— des moyens de déplacement pour réaliser un mouvement de pivotement relatif desdits premier et deuxième organes de guidage autour de l'axe de pivotement, les ensembles de patins centraux étant libres en rotation par rapport audit corps;

— des moyens pour déplacer lesdits ensembles de patins centraux selon ledit axe de pivotement;

— des moyens pour conformer la position des paires d'ensembles de patins d'extrémités à ladite surface;

— des moyens pour commander l'état d'adhérence sur ladite surface ou de non-adhérence desdits patins, et

— des moyens pour commander les moyens de déplacement de telle façon que le pivotement relatif d'un desdits organes de guidage autour de l'axe de pivotement ou la translation d'un desdits chariots ne soit possible que si les patins associés audit chariot ne sont pas en adhérence sur ladite surface et si simultanément les ensembles de patins du corps central et ceux de l'autre chariot sont en adhérence sur ladite surface et de telle façon que le déplacement en translation des deux chariots par rapport auxdits organes de guidage ne soit possible que si les ensembles de patins centraux sont dégagés par rapport à ladite surface et les ensembles de patins associés auxdits chariots sont en adhérence sur la surface.

De préférence, lesdits patins adhérents sont des ventouses pneumatiques ou hydrauliques selon le milieu dans lequel se déplace le véhicule. Chaque ventouse peut alors comprendre une jupe évasée réalisée en un matériau élastique et comportant un fond fermé et un bord libre constituant une lèvre déformable, une pièce d'appui disposée à l'intérieur de ladite jupe et solidaire dudit fond, ladite pièce présentant vers ledit bord libre une surface d'appui réalisée en un matériau à haut coefficient de frottement, et des moyens pour faire le vide à l'intérieur de ladite jupe. Les patins adhérents peuvent être également électromagnétiques.

Selon une autre caractéristique, les moyens pour provoquer le déplacement desdits patins centraux selon la direction dudit axe de pivotement consistent en un premier arbre parallèle à la direction des organes de guidage au repos et des moyens de mise en rotation dudit arbre autour de son axe longitudinal solidaire dudit corps central, un deuxième arbre parallèle au premier et monté pivotant autour de son axe longitudinal par rapport audit corps, un anneau sur lequel sont montés pivotants autour d'un axe perpendiculaire auxdits arbres les deux ensembles de patins, deux premiers ensembles bielle-biellettes solidaires des extrémités du premier arbre et des extrémités d'un axe de cardan porté par ledit anneau, parallèle auxdits arbres et concourant avec ledit axe de pivotement, deux deuxièmes ensembles bielle-biellettes solidaires des extrémités du deuxième arbre et des extrémités dudit axe de cardan, et des moyens pour transmettre audit deuxième arbre à partir dudit premier arbre un mouvement de rotation dans un sens opposé à celui dudit premier arbre.

De toute façon, l'invention sera mieux comprise à lu lecture de la description qui suit de deux modes de réalisation préférés du véhicule objet de l'invention, donnés à titre d'exemples non limitatifs. La description se réfère aux figures annexées sur lesquelles:

— la fig. 1 est une vue en perspective du premier mode de réalisation du véhicule dans lequel les glissières (ou organes de guidage en translation) sont dans le prolongement l'une de l'autre;

— la fig. 2 est une vue en coupe axiale verticale du corps central du véhicule de la fig. 1, montrant la façon dont on réalise les différentes articulations et le mouvement d'élévation;

— la fig. 3 est une vue partielle d'un chariot d'extrémité montrant le dispositif pour replier les bras portant les patins;

— la fig. 4 est une vue en perspective d'un deuxième mode de réalisation ou véhicule dans lequel les organes de guidage sont décalés;

— la fig. 5 est une vue simplifiée illustrant le mode de progression du véhicule de le fig. 1, en ligne droite;

— la fig. 6 est une vue simplifiée illustrant le pivotement du véhicule représenté sur la fig. 1;

— la fig. 7 est une vue partielle montrant une variante de réalisation des liaisons entre les éléments d'un patin;

— la fig. 8 est une vue agrandie montrant un mode de réalisation d'une ventouse, et

— les fig. 9a, 9b et 9c illustrent une variante de réalisation du véhicule selon un des deux modes de réalisation permettant un déplacement sur une paroi présentant un dièdre.

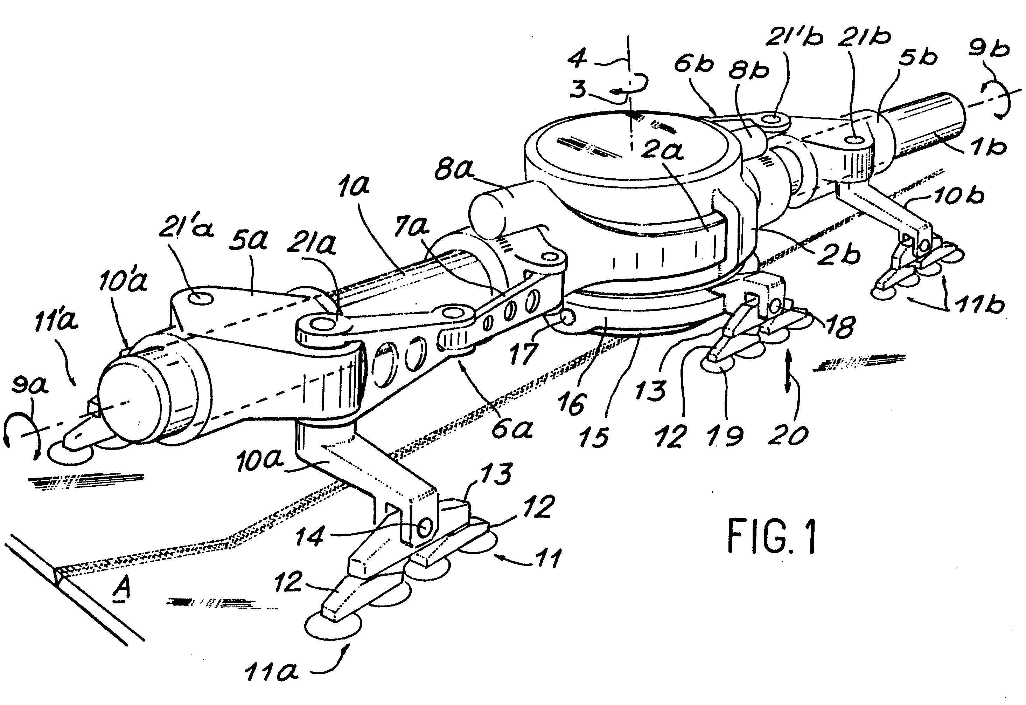

On a représenté sur la fig. 1 un premier mode de réalisation du véhicule selon l'invention. Il comporte deux tubes 1a et 1b (formant des organes de guidage en translation rectiligne) fixés à une extrémité sur une chape 2a (2b) douée d'un mouvement de rotation 3 autour de l'axe 4, lesdits tubes 1a et 1b étant dans ce cas particulier de l'invention concourants avec l'axe de pivotement 4 et autorisant un angle légèrement supérieur à 90°. Chaque tube (1a, 1b) porte respectivement un chariot 5a, 5b coulissant librement le long d'un tube 1a ou 1b respectivement formant glissières, lesdits mouvements de coulissement étant commandés par des actionneurs non représentés afin d'alléger la figure. Chaque chariot (5a, 5b) est maintenu en rotation autour de l'axe de son tube porteur par un pantographe respectivement (6a, 7a et 6b, 7b); ces pantographes sont représentés sur la figure avec leurs différents axes de pivotement en position parallèle à l'axe de pivotement 4; mais on comprend que lorsque la surface A sur laquelle se déplace le véhicule est gauche, lesdits pantographes 6a, 7a et 6b, 7b pourront sortir du plan où ils sont actuellement représentés. Ceci est effectué à l'aide de l'actionneur 8a et d'un actionneur symétrique 8b qui entraînent respectivement chaque ensemble pantographe et chariot dans une rotation autour de l'axe de son tube porteur (1a ou 1b), rotation symbolisée par les flèches 9a autour de l'axe du tube 1a et 9b autour de l'axe du tube 1b.

Des paires de bras 10a (10'a) et 10b (10'b) sont fixées de part et c'autre de chaque chariot 5a, 5b, afin de porter les paires de patins d'appui 11a (11'a), 11b (11'b) par lesquels le véhicule peut s'appuyer sur la surface parcourue. Chaque patin est sensiblement parallèle à l'axe du tube porteur correspondant 1a ou 1b. La surface parcourue pouvant être courbe, les ventouses sont montées deux par deux sur des leviers 12 constituant boogie s'appuyant ici sur un levier 13 monté pivotant par rapport à l'extrémité de chaque bras 10 autour d'un axe 14, l'axe 14 étant perpendiculaire à l'axe du tube porteur correspondant 1a ou 1b. On voit ainsi que les diverses ventouses sont soumises à des pressions égales reportées en chaque point situé sur l'axe tel que 14 à l'extrémité de chaque bras 10. Dans le cas particulier où le véhicule porte sur ses deux chariots 5a, 5b, l'appui sur la surface A est alors équivalent à quatre points des axes 14 et les possibilités de mouvement de gauchissement 9a ou 9b permettent de conformer ces quatre points a'appui avec la surface A. Les patins tels que 11 ici représentés avec des ventouses réalisent à l'aide d'un circuit de vide bien connu de l'homme de l'art et non représenté, l'adhérence sur une surface A relativement lisse, telle que la surface d'une cuve ou d'une paroi murale. Ils pourraient être réalisés avec des pièces adhérentes magnétiques. Chaque ventouse ou aimant peut constituer selon la commande, soit un point de fixation, soit être libre.

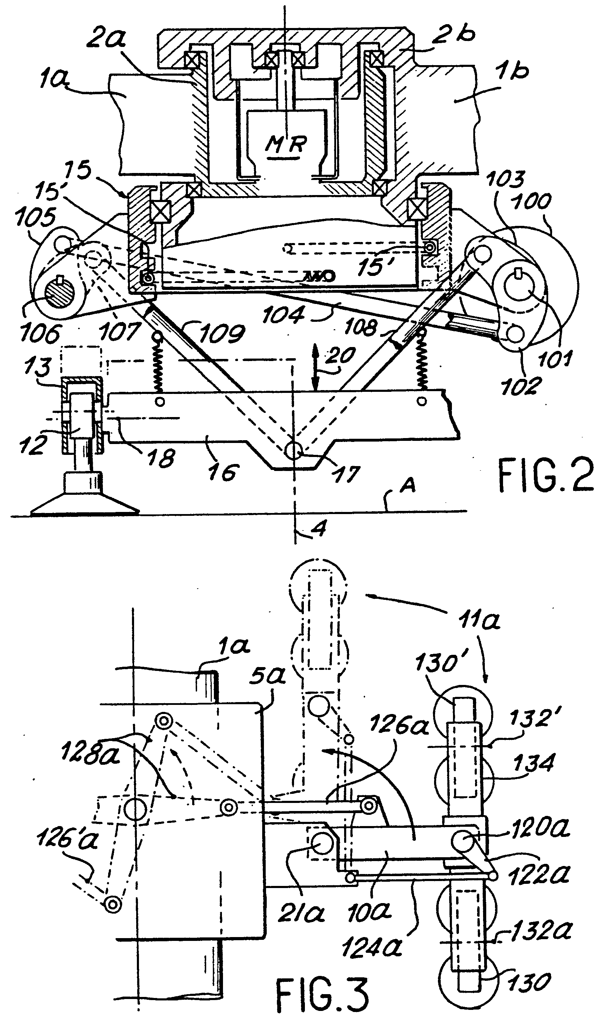

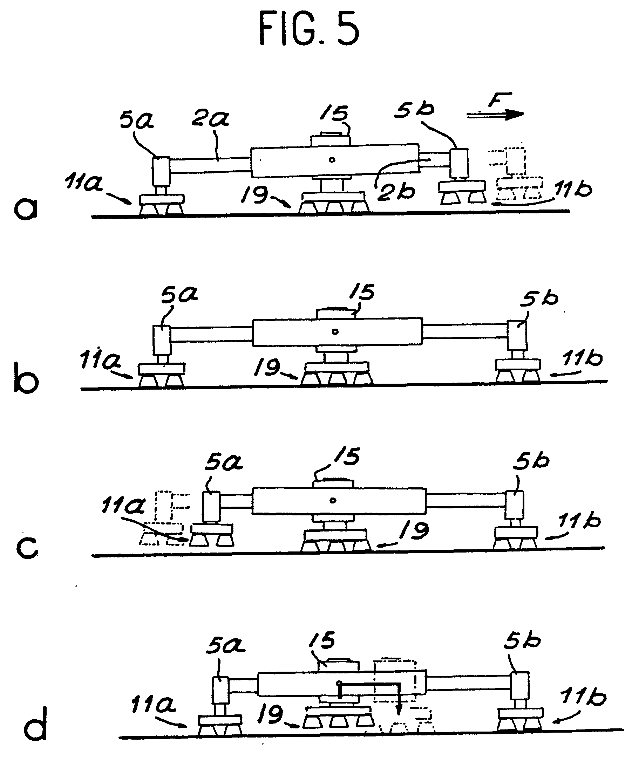

Le pivotement relatif des tubes 1a, 1b autour de l'axe 4 est réalisé par un actionneur (non visible sur 1a fig. 1) qui agit sur les chapes 2a, 2b. Cet actionneur sera décrit ultérieurement en liaison avec la fig. 2 et il est placé à l'intérieur même de l'articulation. Un corps 15 libre en rotation porte l'axe de pivotement 4, la corps 15 étant disposé en-dessous des chapes 2a, 2b. Ce corps 15 porte à sa partie inférieure un anneau 16 pivotant autour de l'axe 17 concourant avec l'axe 4. Cet anneau 16 parte un axe 18 perpendiculaire à l'axe 17 et également concourent ou sensiblement concourant avec l'axe de pivotement 4. Des patins d'appui 19 formant ventouse, semblables aux patins 11 sont montés aux extrémités de l'axe 18 constituées par des tourillons, comme le sont les patins 11 aux extrémités des bras tels que 10 par l'intermédiaire des axes 14. Autrement dit, le patin 19 visible sur la fig. 1 est tangent à l'anneau 16 et le patin symétrique non visible est fixé de la même façon dans une symétrie par rapport à l'axe ce pivotement 4. Cette symétrie est bien entendu approximative lorsque le fonctionnement du carden d'axes 17, 18 permet aux deux patins 19 de se conformer sur le surface d'appui, laquelle n'est pas rigoureusement perpendiculaire à l'axe de pivotement 4. Un déplacement 20 représenté uniquement par une flèche pour alléger la figure permet à l'axe 17 porteur de la bague 16 de coulisser parallèlement à l'axe de pivotement 4 permettant ainsi aux deux patins tels que 19 du corps de se soulever et donc de se dégager de la surface A. On voit alors que si, comme représenté sur la figure, les deux tubes 1a et 1b sont en ligne et les patins 19 soulevés, le fonctionnement simultané des déplacements des deux chariots 5a, 5b relativement à leurs tubes 1a, 1b, conduit en fait au déplacement du corps 15 le lor de la ligne droite matérialisée par les tubes 1a b supportée par les deux chariots 5a, 5b s'appuyant sur les quatre points des axes tels que 14 résultant du contact des différents patins 11a, 11'a, 11b, 11'b, tous conformés selon la courbure propre de la surface. Sien entendu, lors de ce déplacement, il y a variation des résultantes d'appui sur les différents patins formant ventouse, tels que 11 et ceci d'une façon lente et progressive. Lorsque le corps a terminé sa course possible quand, par exemple, le chariot 5b est en contact avec la shape 2b, il est possible de préparer le pas suivant qui consiste à actionner l'absissement 20 ces patins 19 du corps 15, ce qui a pour effet, ce corps étant monté sur cardans, de procurer un appui réparti en un point sensiblement sur l'axe de pivotement 4 et à soulever les deux patins 11b par exemple. On assure en même temps la commande d'adhérence des vertouses 11a et 19 en libérant celle des ventouses 11b et il y a soulèvement du chariot d'extrémité 5b (voir figure 5a). On procède alors à l'extension du chariot 5b sur son tube 1b. Puis, à l'aide de l'élévation 20 des patins du corps, on va jusqu'à la prise de contact des patins 11b avec adhérence de ventouses (figure 5b). Après relâchement des ventouses 11a, on peut de même procéder au rapprochement du chariol 5a jusqu'à buter sur la chape 2a (fig. 5c). Il suffit alors d'actionner à nouveau le mouvement d'élévation 20 du corps pour replacer en contact toutes les ventouses 11a, 11b, dégager les ventouses 19 et déplacer à nouveau le corps 15 (fig. 5d).

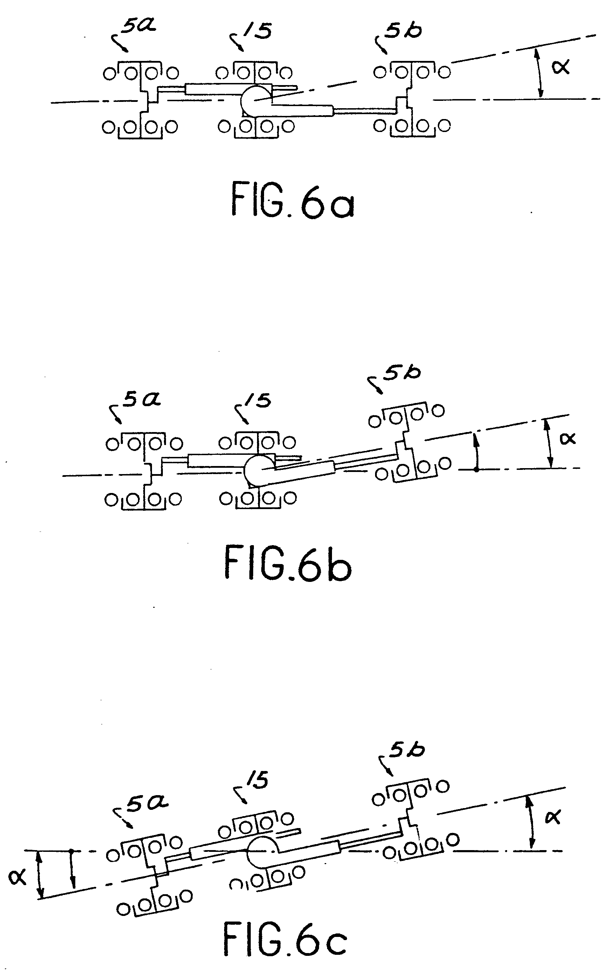

Lorsque l'on désire changer de direction, il suffit avant de reposer les patins 11b après extension du chariot 5b, d'actionner dans la direction voulue le mouvement de pivotement autour de l'axe 4 de façon à marquer la direction dans laquelle le mouvement devra se poureuivre, puis lors du rapprochement du chariot 5a, ramener les deux tubes 1a et 1b en alignement dans la direction nouvelle prise par 1b voir fig. 6a, 6b, 6c). On voit ainsi que la déambulation du véhicule, ici représenté, se réalise selon une ligne polygonale.

Selon le mode de réalisation décrit précédemment, les tubes 1a et 1b sont obligatoirement remis en ligne lors du déplacement du corps 15. Grâce à cela, il n'est pas nécessaire de prévoir de possibilité de rotation des patins par rapport aux chariots. Cela est bien adapté au cas où la véhicule sert à contrôler des soudures semi-rectilignes. Dans le cas où on veut obtenir un déplacement quelconque, les patins doivent être libres en rotation par rapport aux chariots 5a et 5b selon des axes sensiblement perpendiculaires à la surface d'appui. On peut alors coordonner les déplacements des deux chariots sur les tubes 1a et 1b et déplacer le corps 15 lorsque les tubes 1a et 1b forment entre eux un angle.

Lors de l'avancée d'un chariot 5a ou 5b, le chariot opposé étant en contact par ses deux patins et les deux patins 19 du corps étant également en contact, et ces derniers patins étant montés à cardans, on a alors un appui équivalent à trois points qui maintient bien l'ensemble an conformité au contact de la surface lors de l'extension du chariot opposé.

On voit également que lors du déplacement du corps 15, le véhicule porte au moins quatre points d'appui et ces quatre patins ont été rendus conformes au gauchissement de la surface à l'aide de l'un ou l'autre des actionneurs 8a, 8b, ce qui nécessite à cet effet un capteur de contact sur les patins tels que 11a ou 11b de façon à réaliser le contact des différents patins avant la prise des ventouses. À l'aide d'un capteur de contact, et à partir du moment où la première série de ventouses est en contact avec la surface, on peut activer l'actionneur 8a ou 8b dans le sens convenable et l'arrêter lorsque le patin opposé vient en contact avec la surface.

L'action d'un seul actionneur 8a suffirait à conformer le véhicule sur la surface pendant sa déambulation, si cette dernière a lieu en ligne droite ou approximativement. Mais on voit bien que si les deux tubes 1a, 1b forment un certain angle ou sont perpendiculaires, il est néanmoins nécessaire d'utiliser un deuxième actionneur 3b pour pouvoir conformer les patins 11b sur la surface rencontrée dans la direction perpendiculaire. On comprend aussi aue l'usage séparé des actionneurs 8a, 8b lors des pas successifs amène rapidement l'axe 4 à s'éloigner de la perpendiculaire moyenne à la surface. C'est pourquoi avant le déplacement simultané des deux chariots lorsque 1a et 1b sont en ligne droite, les deux actionneurs 8a et 8b sont amenés à se partager à angles égaux le geuchissement relatif entre les ensembles de patins 11a, 11'a et 11b, 11'b. Ceci est également réalisé à l'aide d'un automatisme très simple.

On notera de plus que les deux actionneurs 8a et 8b utilisés séparément ou combinés pour conformer le véhicule au gauchissement de la surface parcourue peuvent être remplacés par des embroyages permettant le pivotement libre du chariot qui leur correspond jusqu'à prise de contact des deux patins qui lui correspondent également et sont bloqués ensuite, au lieu d'utiliser des actionneurs motorisés comme décrit précédement. Néanmoins, un tel système ne peut être correctement employé que si le véhicule parcourt des surfaces relativement proches de l'horizontale.

On voit de plus que lors de cette déambulation, la libre rotation du corps 15 autour de l'axe 4 l'amènerait à tourner indéfiniment, ce qui complique en particulier le montage des tubes d'aspiration assurant l'adhérence des ventouses et de plus amène les patins 19 à un angle quelconque pouvant faire rencontrer les patins 11a et 11b. C'est pourquoi lorsque les patins 19 sont dégagés pendant la translation simultanée des deux chariots, un système de rappel qui peut être constitué par les ressorts annulaires 15' de la fig. 2 ramène les patins 19 à être sensiblement parallèles aux axes 1a, 1b.

La fig. 2 montre avec plus de détails la réalisation des chapes 2a, 2b et leur montage par rapport au corps 15 autour de l'axe 4. On a représenté par MR le motoréducteur (présentant un rapport de réduction très élevé) qui permet de commander la rotation relative des tubes 1a et 1b autour de l'axe 4.

Sur cette fig. 2, on a également représenté les mecanismes de "monte et baisse" des patins centraux 19. Le corpe 15 ports un motoréducteur 100 représenté de profil, dont l'arbre 101 porte à chaque extrémité deux leviers 102 et 103. Le levier 102 entraîne par la bielle 104 et un levier 105 l'axe 106 symétrique sur le corps 15 de l'axe 101 du motoréducteur 100 par rapport à l'axe 4. Les leviers 102, 105 ont des rotations sensiblement opposées. Un levier 107 solidaire de l'axe 106 possède un mouvement symétrique de celui du levier 103. Les deux bielles 108 et 109 respectivement montées sur les leviers 103 et 107 s'attachant sur l'axe 17 entraînent ce dernier selon la flèche 20. On rappelle que les tourillons définissant les axes 17 et 18 sont portés par l'anneau 16.

On voit par ailleurs que le montage retenu dans le véhicule représenté fig. 1, conduit à assurer la stabilité transversale à partir de l'empattement des patins 11a, 11'a ou 11b, 11'b de part et d'autre du tube porteur correspondant 1a ou 1b alors qu'inversement le corps 15 n'apporte aucune stabilité puisque son appui à la surface est équivalent à un appui ponctuel du fait du système de cardan. En conséquence, l'écartement des patins 11a ou 11b présente une grande importance. Or, dans l'application où le véhicule représenté figure 1 doit pénétrer par un passage réduit, comme le trou d'homme permettant d'accéder dans certaines parties d'une installation à la verticale d'une paroi devant être parcourue par le véhicule, il peut être nécessaire, le véhicule étant suspendu par une de ses extrémités, de réduire l'empattement à la valeur minimale correspondant à celle des pieds des patins 19. A cet effet, sur le dispositif représenté, les bras tels que 10a sont montés pivotants sur des axes tels que 21a de part et d'autre du chariot 5a, un de ces axes étant caché sur la fig. 1 et pour les bras 10b de même, de part et d'autre du chariot 5b pivotant autour d'un axe 21b, l'un de ces axes étant caché sur la fig. 1. Cette possibilité de repli des bras 10a, 10b n'intervient bien entendu nullement pour la marche normale du véhicule selon l'invention, mais uniquement pour la réduction de sa section frontale pour le franchissement d'une ouverture étroite.

Le fig. 3 représente un exemple de réalisation des mécanismes permettant le rabattement des bras tels que 10 en demi-vue de dessus. Le bras 10a est monté pivotant par rapport au chariot 5a autour d'un axe 21a orthogonal à l'axe du tube 1a. Le patin 11a est lui-même monté pivotant par rapport au bras 10a par l'intermédiaire d'un axe 120a solidaire des patins 11a et monté tourillonnant à l'extré-

**0010034**

mité du bras 10a. L'axe 120a est solidaire d'un ensemble de bielles 122a, 124a dont l'autre extrémité est articulée sur le chariot. Cet embiellage forme avec le bras 10a un parallélogramme déformable. Un autre ensemble de bielles 126a, attaché au bras 10a et 126'a attaché au bras 10'a est articulé à une bielle 128a, associée à un actionneur (non représenté) et permet de commander le pivotement des bras 10a (10'a) autour des axes symétriques 21a, 21'a. On comprend que grâce aux parallélogrammes déformables, les ensembles de patins restent parallèles à eux-mêmes lors du pivotement des bras. En outre, le système de bielles 126a, 128a est tel qu'on a une position de blocage lorsque les bras sont déployés.

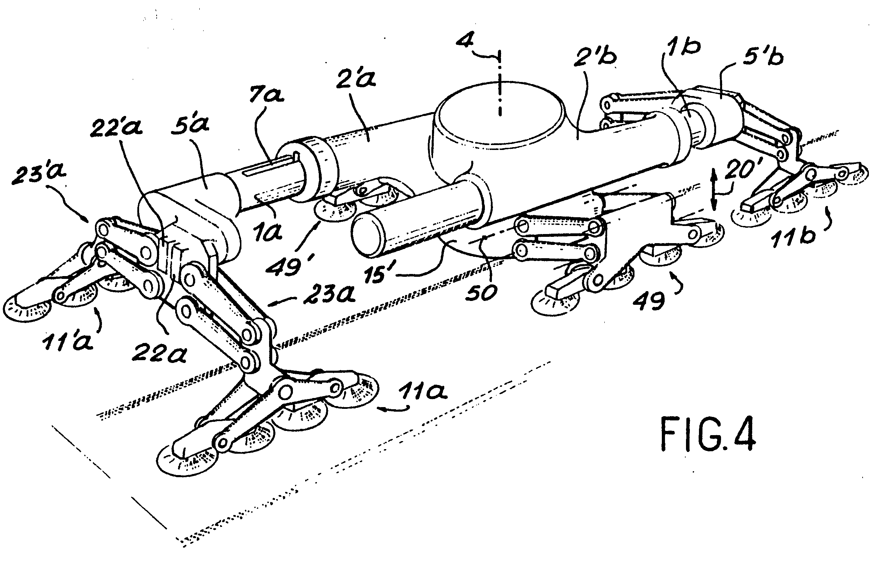

La fig. 4 représente un deuxième mode de réalisation du véhicule selon l'invention différent du premier en ce que les tubes 1a et 1b portant ici les mêmes références sont tous deux non concourants avec l'axe de pivotement 4 auquel cependant ils restent orthogonaux à une certaine distance qui est ici égale. Il en résulte que les pièces de pivotement ont une disposition différente visible sur la fig. 4 autorisant de même que précédemment un angle de débattement légèrement supérieur à un angle droit de part et d'autre de la position alignée. Une deuxième différence de ce mode de réalisation, qui n'est nullement liée à la première différence et qui pourrait s'appliquer au premier mode de réalisation, consiste dans le fait que les tubes 1a et 1b sont ici solidaires de leur chariot respectif 5'a et 5'b et coulissent dans les pièces 2'a et 2'b qui sont équivalentes aux pièces 2a et 2b, mais qui jouent en plus le rôle de guide pour les tubes 1a et 1b. Elles constituent l'articulation du pivotement central d'axe 4. Cette disposition présente l'avantage de concentrer les masses correspondant en particulier aux actionneurs des coulissements dans la partie centrale du véhicule (là encore lesdits actionneurs ne sont pas représentés afin d'alléger la figure). Des clavettes et rainures telles que 7a assurent ici le guidage en rotation des tubes 1a et 1b dans les pièces 2'a, 2'b. Ce véhicule diffère également du mode de réalisation précédent en ce que le corps 15', également libre de pivotement autour de l'axe 4, reçoit directement deux ensembles de patins 49 et 49' munis chacun d'un mouvement d'élévation 20' autour des axes 50. Lorsque les mouvements 20' sont identiques pour les patins 49 et les patins symétriques 49', il en résulte qu'en appui sur ses deux ensembles de patins 49 et 49', le corps 15' prend de lui-même une position sensiblement perpendiculaire à la surface sur laquelle il est posé. Il n'y a pas alors équivalence avec l'appui ponctuel réalisé par le système à cardan de la fig. 1. Cette caractéristique pourrait également être appliqués au premier mode de réalisation.

Les chariots télescopiques 5'a et 5'b comportent également des moyens d'élévation de leurs patins 11a et 11'a représentés sous forme d'actionneurs indépendants 22a, 22'a commandant les bras 23a, 23'a. Dans ces conditions, on voit que la prise à l'aide de ses ventouses du corps principal 15' sur ses deux patins 49 et 49' permet, lors de l'extension du tube 1a portant son chariot 5'a avec ses patins relevés, de réalisor les prises de contact indépendantes du patin 11a et du patin 11'a, chacun étant commandé par son mécanisme d'élévation propre 22a, 22'a. Il en résulte que sur un sol gauche, l'arrêt de l'élévation étant commandé par un capteur de prise de contact sur la surface, chacun s'arrêtera dans la position convenable. La combinaison de ces deux actionneurs joue le rôle du mouvement de gauchissement représenté par la flèche 9a sur la fig. 1. Il en est de même pour le chariot 5b, ce qui assure une stabilité du véhicule réalisée différemment de celle du véhicule précédent, mais équivalente. Le déplacement simultané des deux tubes à l'intérieur des chapes 2'a, 2'b n'est possible que lorsque ces deux tubes 1a, 1b sont parallèles, ce qui équivaut à la position alignée du véhicule de la fig. 1.

Sur les fig. 5a à 5d, on a représenté schématiquement la progression rectiligne du véhicule selon la direction F. Ce mode de déplacement est identique à celui qui a été décrit en détail à propos du premier mode de réalisation. Le déplacement du véhicule selon le deuxième mode de réalisation (fig. 4) est analogue à celui du véhicule selon le premier mode de réalisation, il suffit de remplacer le soulèvement du corps 15 qui provoque le soulèvement du chariot (5a ou 5b) qui n'est pas en adhérence, par le soulèvement des patins d'un des chariots d'extrémité. La séquence est alors la suivante: (la référence aux figures se faisant par analogie); on part d'une position (5a) où le chariot 5b est en butée sur la chape 2b. On soulève le chariot 5b et on provoque son extension maximale (4a en pointillés). Puis on abaisse le chariot 5b (figure 5b). Ensuite on provoque le soulèvement et le rapprochement du chariot 5a (fig. 5c). Enfin, on déplace le corps 15 après relèvement des patins (fig. 5d) pour revenir au point de départ.

Bien entendu, les débattements angulaires de tous les ensembles porte-patins formant boogies représentés sur les fig. 1 et 4 sont faibles lorsque les surfaces quelconques sur lesquelles les véhicules selon l'invention sont amenés à déambuler présentent des courbures limitées, comme c'est le cas par exemple des surfaces cylindriques, toriques ou sphériques des principales cuves sur lesquelles de tels véhicules peuvent permettre des inspections de surface. Toutes les articulations représentées devront donc pour une surface connue avoir une amplitude angulaire limitée par des butées ou réalisées par des montages élastiques utilisant des supports antivibratoires à base d'élastomère ou des systèmes à ressorts croisés.

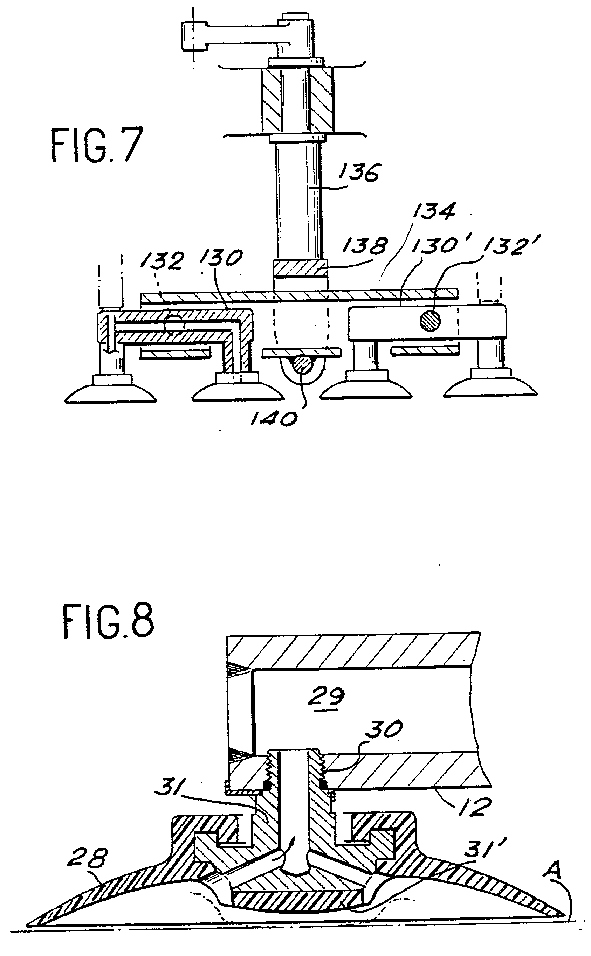

Sur la fig. 7, on a représenté un mode préféré de réalisation d'un patin porte-ventouses (quatre dans l'example considéré) employé sur l'un comme sur l'autre des véhicules représentés sur les fig. 1 et 4. Deux ventouses sont fixées aux extrémités d'un premier levier 130 (130'). Ces deux leviers 130 et 130' sont articulés autour d'axes 132, 132' montés aux extrémités d'un levier principal 134 constitué par un profilé creux à section rectangulaire dans lequel sont partiellement logés les leviers 130 et 130'. Le levier 134 est lui-même articulé à l'extrémité inférieure d'une tige 136 par l'intermédiaire d'une chape 138 enjambant le levier 134 et traversée par l'axe 140 fixé sur le face inférieure du profilé 134. Il faut noter que grâce à ce montage particulier, l'axe principal d'articulation de l'ensemble du patin est situé en-dessous des axes d'articulation des paires de ventouses, ce qui augmente la stabilité transversale de l'ensemble. On remarquera que cette structure comprend elle-même les butées évoquées plus haut.

On a représenté sur la fig. 8 un détail d'une ventouse selon l'invention, comportant une jupe formant la lèvre d'étanchéité 28, et mise en dépression par l'intermédiaire d'une aspiration réalisée dans le cas particulier ici représenté par l'intérieur du bras 12 percé selon 29, communiquant grâce au passage ménagé dans le prolongement fileté 30 avec l'intérieur de la ventous sans nécessiter aucun tube souple. La mise sous dépression provoque une force d'appui de le ventouse sur la surface A. La ventouse est essentiellement caractérisée en ce que une surface convexe 31' de la pièce 31 constitue l'appui de cette ventouse avec possibilité de flexion de la lèvre 28 d'appui à angle variable. La surface d'appui 31' du pied ainsi constitué étant également réalisée en élastomère ou en produit à haut coefficient de frottement transforme ainsi la succion de la ventouse en effet de frottement empêchant le glissement de ladite ventouse sur une surface non horizontale. De préférence, la surface d'appui 31' et la jupe 28 sont moulées sur la pièce 31 en une seule pièce comme on le voit sur la fig. 8. On voit de plus que l'usage de la surface sphérique permet de conserver le fonctionnement de cette ventouse jusqu'à des débattements angulaires dus à l'effet de la courbure de la surface sur la distance entre deux ventouses consécutives et latéralement entre deux patins. Cet angle rests bien entendu très faible sur les rayons de courbure courants. Comme on l'a indiqué, cette ventouse peut très bien avoir d'autres usages.

On comprend que de plus, en commandant de façon convenable les actionneurs associés au mouvement de coulissement des chariots par rapport aux tubes ou des tubes par rapport aux chapes, on peut faire franchir au véhicule des discontinuités telles que des trous ou failles dans la paroi sur laquelle se déplace le véhicule.

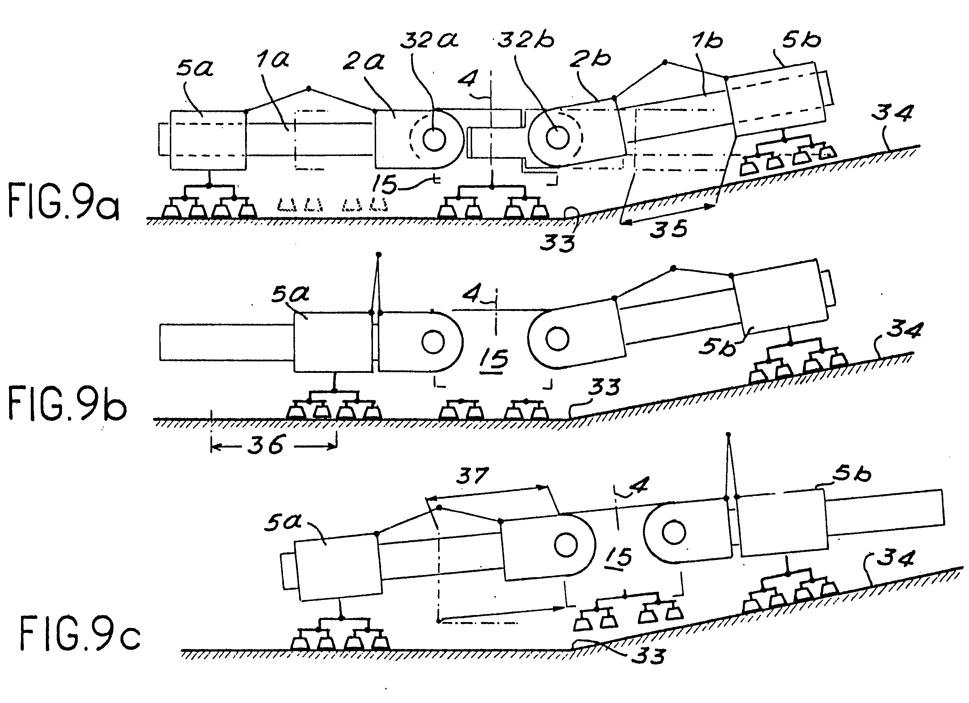

On voit sur les fig. 9a à 9c, des perfectionnements aux véhicules selon l'invention tels que représentés sur les fig. 1 et 4, permettant de franchir des discontinuités angulaires de la surface. On voit sur la fig. 9a un véhicule dérive de celui de la fig. 1, auquel on a ajouté deux axes de pivotement complémentaires perpendiculaires à l'axe de pivotement de base 4, ces axes 32a et 32b permettant de donner aux tubes 1a et 1b porteurs des chariots 5a, 5b, un angle d'au moins 45°. Des actionneurs sont associés à chacun de ces deux axes de pivotement, ces actionneurs n'étant pas représentés sur la figure. On voit alors que placé devant un dièdre d'arête 33 lors de l'avance du chariot 5b, il est possible en actionnant l'axe 32b perpendiculaire au tube 1b et à l'axe 4 de rendre ledit tube 1b sensiblement parallèle à la portion 34 qui fait suite à l'arête 33.

Plus précisément, sur la fig. 9a, on a représenté en pointillés pour la partie b du véhicule, la position du chariot 5b et de la tige 1b avant l'attaque de la pente. En trait plein on a représenté le soulèvement du tube 1b et le déplacement du chariot 5b d'un pas 35. Sur la fig. 9b, le chariot 5b n'a pas bougé, mais on a rapproché le chariot 5a d'un pas 36. Enfin, sur la fig. 9c, en agissant sur la commande de l'axe 32b, on soulève le corps 15 et on déplace celui-ci pour l'amener au droit de l'arête 33 en position soulevée (pas 37). Il ne reste plus qu'à abaisser le corps central 15 pour qu'il reprenne contact avec la surface A par ses patins.

On pourrait également franchir une arête à 90° en utilisant les mouvements actifs de gauchissement des chariots 5a, 5b de ce véhicule, mouvements qui sont figurés par les flèches 9a et 9b sur la fig. 1.

Enfin, il va de soi que le véhicule, quel que soit le mode de réalisation considéré comporte des liaisons d'alimentation (électrique, pneumatique ou hydraulique) pour commander les différents actionneurs et les moyens d'adhérence à partir d'un ensemble fixe de commande. Cet ensemble de commande peut être géré à partir d'informations fournies par une caméra de télévision. Il peut également être géré par on programme et des automatismes correspondant à l'ensemble des informations à transmettre aux actionneurs et à la commande des moyens d'adhérence.

**Revendications**

1. Véhicule apte à se déplacer par adhérence sur une surface quelconque (A), caractérisé en ce qu'il comprend:

— un corps central (15) définissant un axe de pivotement (4) qui reste sensiblement perpendiculaire à ladite surface et qui comporte deux ensembles de patins centraux (19) adhérant sur ladite surface, les deux ensembles étant disposés symétriquement par rapport audit axe de pivotement;

— un premier et un deuxième chariots (5a, 5b) munis chacun de deux ensembles de patins d'extrémité adhérents (11a, 11'a, 11b, 11'b);

— un premier et un deuxième organes de guidage (1a, 1b) en translation rectiligne sans rotation des premier et deuxième chariots (5a, 5b) selon deux directions restant sensiblement orthogonales audit axe de pivotement (4), les deux ensembles de patins d'extrémité (11a, 11'a, 11b, 11'b) associés à un même chariot étant disposés symétriquement par rapport à un plan, d'une part contenant ou parallèle à l'axe de translation rectiligne et d'autre part contenant l'axe de pivotement et reliés audit chariot par des bras (10a, 10'a, 10b, 10'b);

— des moyens de déplacement (6a, 7a, 6b, 7b) pour entraîner indépendamment lesdits premier et deuxième chariots le long desdits organes de guidage;

— des moyens de déplacement (MR) pour réaliser un mouvement de pivotement relatif (3) desdits premier et deuxième organes de guidage (1a, 1b) autour de l'axe de pivotement (4), les ensembles de patins centraux (19) étant libres en rotation par rapport audit corps (15);

— des moyens (100) pour déplacer lesdits ensembles de patins centraux selon ledit axe de pivotement;

— des moyens (8a, 8b) pour conformer la position des paires d'ensembles de patins d'extrémités à ladite surface;

— des moyens pour commander l'état d'adhérence sur ladite surface ou de non-adhérence desdits patins adhérents, et

— des moyens pour commander les moyens de déplacement (6a, 7a, 6b, 7b, MR) de telle façon que le pivotement relatif d'un desdits organes de guidage (1a, 1b) autour de l'axe de pivotement (4) ou la translation d'un desdit chariots (5a, 5b) ne soit possible que si seuls les patins associés audit chariot ne sont pas en adhérence sur ladite surface et de telle façon que le déplacement en translation des deux chariots par rapport auxdits organes de guidage ne soit possible que si seuls les ensembles de patins centraux sont dégagés par rapport à ladite surface.

2. Véhicule selon la revendication 1, caractérisé en ce que lesdits patins adhérents (19, 11a, 11'a, 11b, 11'b) sont constitués par des ventouses pneumatiques ou hydrauliques.

3. Véhicule selon la revendication 2, caractérisé en ce que chaque ventouse comprend une jupe évasée (28) réalisée en un matériau élastique et comportant un fond fermé et un bord libre constituant une lèvre déformable, une pièce d'appui (31) disposée à l'intérieur de ladite jupe et solidaire dudit fond, ladite pièce présentant vers ledit bord libre une surface d'appui (31') réalisée en un matériau à haut coefficient de frottement, et des moyens (29) pour faire le vide à l'intérieur de ladite jupe.

4. Véhicule selon la revendication 3, caractérisé en ce que ladite surface d'appui (31') est sphérique.

5. Véhicule selon la revendication 1, caractérisé en ce que lesdits patins adhérents (19, 11a, 11'a, 11b, 11'b) sont constitués par des pièces electromagnétiques.

6. Véhicule selon l'une quelconque des revendications 1 à 5, caractérisé en ce que lesdits organes de guidage en translation rectiligne consistent en deux tubes (1a, 1b), une première extrémité de chaque tube étant solidaire d'une pièce formant chape (2a, 2b) apte à tourner autour dudit axe de pivotement (4) défini par le corps central (15), les axes des deux tubes coupant ledit axe de pivotement en un même point, et en ce que chaque chariot (5a, 5b) est apte à coulisser sur le tube qui lui est associé.

7. Véhicule selon la revendication 8, caractérisé en ce que les deux ensembles de patins centraux (19) sont fixés à l'extrémité de deux bras eux-mêmes reliés audit corps central par un système à cardan (17, 18) ayant ses deux axes concourant avec ledit axe de pivotement (4).

8. Véhicule selon la revendication 7, caractérisé en ce que les moyens pour provoquer le déplacement (20) desdits patins centraux selon la direction dudit axe de pivotement consistent en un premier arbre (101) parallèle à la direction des organes de guidage au repos et des moyens (100) de mise en rotation dudit arbre autour de son axe longitudinal solidaire dudit corps central (15), un deuxième arbre (106) parallèle au premier et monté pivotant autour de son axe longitudinal par rapport audit corps, un anneau (16) sur lequel sont montés pivotants autour d'un axe (18) perpendiculaire auxdits arbres les deux ensembles de patins, deux premiers ensembles bielle-biellettes (103, 108) solidaires des extrémités du premier arbre (101) et des extrémités d'un axe de cardan (17) porté par ledit anneau, parallèle auxdits arbres et concourant avec ladit axe de pivotement, deux deuxièmes ensembles bielle-biellettes (107, 109) solidaires des extrémités du deuxième arbre (106) et des extrémités dudit axe de cardan (17), et des moyens (102, 104, 105) pour transmettre audit deuxième arbre à partir dudit premier arbre un mouvement de rotation dans un sens opposé à celui dudit premier arbre.

9. Véhicule selon l'une quelconque des revendications 6 à 8, caractérisé en ce que chaque ensemble de patins d'extrémité est monté pivotant à l'extrémité d'un bras (10a, 10b) autour d'un premier axe (120a) orthogonal à l'axe de l'organs de guidage associé, en ce que ledit bras est lui-même monté pivotant par rapport au chariot associé autour d'un deuxième axe (21a) parallèle au premier, en ce que chaque chariot comporte des moyens (126a, 128a) pour provoquer la pivotement des deux bras qui lui sont associés autour des deux deuxièmes axes et en ce que chaque bras comporte un système d'embiellage (122a, 124a) pour maintenir chaque ensemble de patins parallèle à l'axe de l'organe de guidage associé lors du pivotement desdits bras.

10. Véhicule selon l'une quelconque des revendications 6 à 9, caractérisé en ce que chaque chariot est muni de moyens commandables (8a, 8b) pour provoquer la rotation dudit chariot autour de l'axe du tube qui lui est associé.

11. Véhicule selon l'une quelconque des revendications 6 à 10, caractérisé en ce que la première extrémité de chaque tube est reliée à la pièce formant chape par l'intermédiaire d'une articulation (32a, 32b) permettant un mouvement relatif autour d'un axe orthogonal à l'axe de pivotement (4) et perpendiculaire à l'axe dudit tube, ladite articulation étant munie de moyens pour réaliser ledit mouvement.

12. Véhicule selon l'une quelconque des revendications 1 à 5, caractérisé en ce que lesdits moyens de guidage en translation rectiligne consistent en deux tubes (1a, 1b), une première extrémité de chaque tube étant apte à coulisser dans une pièce (2'a, 2'b) formant, d'une part, une chape apte à pivoter autour dudit axe de pivotement défini par le corps central et, d'autre part, un guide pour le coulissement dudit tube associé selon un axe orthogonal audit axe de pivotement, mais non sécant avec celui-ci, et en ce que la deuxième extrémité de chaque tube est solidaire d'un desdits chariots (5'a, 5'b), chaque tube étant immobilisé en rotation par rapport à la pièce formant chape.

13. Véhicule selon le revendication 12, caractérisé en ce que chacun des deux ensembles de patins centraux (49) est solidaire de l'extrémité d'un bras dont l'autre extrémité est reliée au corps central par une articulation autour d'un axe (50) orthogonal audit axe de pivotement, chaque articulation étant associée à un moyen commandable pour provoquer le déplacement du bras associé.

14. Véhicule selon l'une quelconque des revendications 12 et 13, caractérisé en ce que les bras sur lesquels sont montés lesdits ensembles de patins d'extrémités (11a, 11b) sont articulés par rapport au chariot correspondant (5'a, 5'b) autour d'un axe parallèle à l'axe du tube (1a, 1b) associé audit chariot, chaque articulation étant munie de moyens commandables (22a, 22'a) pour provoquer le mouvement du bras.

## Patentansprüche

1. Fahrzeug, welches durch Haftung auf einer beliebigen Oberfläche bewegbar ist, dadurch gekennzeichnet, daß es aufweist, einen Zentralkörper (15), welcher eine Drehachse (4) festlegt, welche im wesentlichen senkrecht zu der Oberfläche bleibt, und welcher zwei Einheiten von zentralen Füßen (19) aufweist, die auf der Oberfläche anhaftbar sind, wobei die zwei Einheiten symmetrisch in bezug auf die Drehachse angeordnet sind, einen ersten und einen zweiten Schlitten (5a,5b) von denen ein jeder mit zwei Einheiten von anhaftbaren Endfüßen (11a,11'a,11b,11'b) versehen ist, ein erstes und ein zweites Führungselement (1a,1b) zur drehfreien, geradlinigen Bewegung des ersten und zweiten Schlittens (5a,5b) längs zweier Richtungen, die im wesentlichen orthogonal zu der Drehachse (4) bleiben, wobei die zwei demselben Schlitten zugeordneten Einheiten von Endfüßen (11a,11'a,11b,11'b) symmetrisch in bezug auf eine Ebene, die einerseits die Achse der geradlinigen Bewegung enthält oder dazu parallel ist und andererseits die Drehachse enthält, angeordnet und mit dem Schlitten durch Arme (10a,10'a,10b,10'b) verbunden sind, Bewegungsmittel (6a,7a,6b,7b) um den ersten und den zweiten Schlitten längs der Führungselemente unabhängig voneinander anzutreiben, Bewegungsmittel (MR), um eine relative Drehbewegung (3) der ersten und zweiten Führungselemente (1a,1b) um die Drehachse (4) durchzuführen, wobei die Einheiten der zentralen Füße (19) drehmäßig in bezug auf den Körper (15) frei sind, Mittel (100), um die Einheiten von zentralen Füßen längs der Drehachse zu bewegen, Mittel (8a,8b), um die Lage der Paare von Einheiten von Endfüßen an die Oberfläche anzupassen, Mittel, um den Zustand der Anhaftung an der Oberfläche oder der Nichtanhaftung der anhaftbaren Füße zu steuern, und Mittel, um die Bewegungsmittel (6a,7a,6b,7b, MR) derart zu steuern, daß die relative Drehung der Führungselemente (1a,1b) um die Drehachse (4) oder die Bewegung der Schlitten (5a,5b) nur möglich ist, wenn nur die diesem Schlitten zugeordneten Füße nicht an der Oberfläche anhaften, und derart, daß die Verschiebebewegung der zwei Schlitten relativ zu den Führungselementen nur möglich ist, wenn nur die Einheiten der zentralen Füße in bezug auf die Oberfläche frei sind.

2. Fahrzeug nach Anspruch 1, dadurch gekennzeichnet, daß die anhaftbaren Füße (19,11a,11'a,11b,11'b) von pneumatischen oder hydraulischen Saugnäpfen gebildet sind.

3. Fahrzeug nach Anspruch 2, dadurch gekennzeichnet, daß jeder Saugnapf einen ausladenden Mantel (28), der aus einem elastischen Material gebildet ist und einen geschlossenen Boden und einen freien, eine verformbare Lippe bildenden Rand umfaßt, wobei ein Stützteil (31) im Inneren des Mantels und mit des Boden fest verbunden vorgesehen ist, welches in Richtung auf den freien Rand eine Stützfläche (31') aufweist, die aus einem Material mit einem großen Reibungskoeffizienten gebildet ist, und Mittel (29) aufweist, um im Inneren des Mantels einen Unterdruck herzustellen.

4. Fahrzeug nach Anspruch 3, dadurch gekennzeichnet, daß die Stützfläche (31') sphärisch ist.

5. Fahrzeug nach Anspruch 1, dadurch gekennzeichnet, daß die anhaftbaren Füße (19,11a,11'a,11b,11'b) von elektromagnetischen Teilen gebildet sind.

6. Fahrzeug nach irgendeinem der Ansprüche 1 bis 5, dadurch gekennzeichnet, daß die Führungselemente zur geradlinigen Bewegung aus zwei Rohren (1a,1b) bestehen, daß ein erstes Ende eines jeden Rohres fest mit einem eine Haube (2a,2b) bildenden Element verbunden ist, welches um die durch den Zentralkörper (15) festgelegte Drehachse (4) drehbar ist, daß die Achsen der zwei Rohre die Drehachse im selben Punkt schneiden, und daß jeder Schlitten (5a,5b) auf dem ihm zugeordneten Rohr verschiebbar ist.

7. Fahrzeug nach Anspruch 6, dadurch gekennzeichnet, daß die zwei Einheiten von zentralen Füßen (19) an dem Ende zweier Arme befestigt sind, die mit dem Zentralkörper über ein Kardansystem (17,18) verbunden sind, dessen zwei Achsen die Drehachse (4) schneiden.

8. Fahrzeug nach Anspruch 7, dadurch gekennzeichnet, daß die Mittel zum Herbeiführen der Bewegung (20) der zentralen Füße längs der Richtung der Drehachse bestehen aus einer ersten Welle (101), die parallel zur Richtung der Führungselemente im Ruhezustand verläuft, aus fest mit dem Zentralkörper (15) verbundenen Mitteln (100) zur Drehung der Welle um ihre Längsachse, aus einer zweiten Welle (106), die parallel zur ersten verläuft und um ihre Längsachse in bezug auf den Körper verschwenkbar befestigt ist, aus einem Ring (16), an dem die zwei Einheiten von Füßen um eine senkrecht zu den Wellen verlaufende Achse (18) verschwenkbar angeordnet sind, aus zwei ersten Pleuel-Pleuelstangen-Einheiten (103,108), die mit den Enden der ersten Welle (101) und den Enden einer Kardanachse (17) fest verbunden sind, die von dem Ring gehalten ist und parallel zu den Wellen verläuft und die Drehachse schneidet, aus zwei zweiten Pleuel-Pleuelstange-Einheiten (107,109), die fest mit den Enden der zweiten Welle (106) und den Enden der Kardanachse (17) verbunden sind, und aus Mitteln (102,104,105), um auf die zweite Welle ausgehend von der ersten Welle eine Drehbewegung zu übertragen, deren Richtung zu derjenigen der ersten Welle entgegengesetzt ist.

9. Fahrzeug nach irgendeinem der Ansprüche 6 bis 8, dadurch gekennzeichnet, daß jede Einheit von Endfüßen verschwenkbar um eine erste Achse (120a), die zu der Achse des zugeordneten Führungselementes orthogonal verläuft, an dem Ende eines Armes (10a,10b) angeordnet ist, daß der Arm selbst in bezug auf den zugeordneten Schlitten verschwenkbar um eine zweite, zu der ersten Achse parallele Achse (21a) angeordnet ist, daß jeder Schlitten Mittel (126a,128a) umfaßt, um die Verschwenkung der zwei Arme, die ihm zugeordnet sind, um die zwei zweiten Achsen zu bewirken, und daß jeder Arm ein Kurbelstangensystem (122a,124a) aufweist, um beim Verschwenken der Arme jede Einheit von Füßen parallel zur Achse des zugeordneten Führungselementes zu halten.

10. Fahrzeug nach irgendeinem der Ansprüche 6 bis 9, dadurch gekennzeichnet, daß jeder Schlitten mit steuerbaren Mitteln (8a,8b) versehen ist, um die Drehung des Schlittens um die Achse des Rohres zu bewirken, welches ihm zugeordnet ist.

11. Fahrzeug nach irgendeinem der Ansprüche 6 bis 10, dadurch gekennzeichnet, daß das erste Ende jeden Rohres mit dem eine Kappe bildenden Teil mittels eines Gelenkes (32a,32b) verbunden ist, welche eine relative Bewegung um eine Achse ermöglicht, die orthogonal zur Drehachse (4) und senkrecht zur Achse des  ʾres verläuft, und daß das Gelenk mit Mitte·   ;gerüstet ist, um die Bewegung durchzufü:

12. Fa ʾzeug nach irgendeinem der Ansprüche 1 bis 5, dadurch gekennzeichnet, daß die Führungselemente zur geradlinigen Bewegung aus zwei Rohren (1a,1b) bestehen, daß ein ersten Ende eines jeden Rohres in einem Teil (2'a,2'b) verschiebbar ist, welches einerseits eine Kappe, die um die von dem Zentralkörper festgelegte Drehachse drehbar ist und andererseits eine Führung für die Verschiebung des zugeordneten Rohres längs einer zu der Drehachse senkrechten Achse ohne diese zu schneiden, bildet, und daß das zweite Ende eines jeden Rohres fest mit einem der Schlitten (5'a,5'b) verbunden ist, wobei jedes Rohr gegenüber einer Drehung in bezug auf das die Kappe bildende Teil festgehalten ist.

13. Fahrzeug nach Anspruch 12, dadurch gekennzeichnet, daß jede der zwei Einheiten von zentralen Füßen (49) fest mit dem Ende eines Armes verbunden ist, dessen anderes Ende mit dem Zentralkörper über eine Gelenkverbindung um eine Achse (50) verbunden ist, welche zur Drehachse orthogonal verläuft, und daß jeder Gelenkverbindung ein Steuermittel zugeordnet ist, um die Bewegung des zugeordneten Armes zu bewirken.

14. Fahrzeug nach einem der Ansprüche 12 oder 13, dadurch gekennzeichnet, daß die Arme, an denen die Einheiten von Endfüßen (11a,11b) befestigt sind, in bezug auf den entsprechenden Schlitten (5'a,5'b) um eine zu der Achse des dem Schlitten zugeordneten Rohres (1a,1b) parallele Achse verschwenkbar sind, und daß jede Gelenkverbindung mit steuerbaren Mitteln (22a,22'a) versehen ist, um die Bewegung des Armes zu bewirken.

**Claims**

1. Vehicle able to propel itself by adhesion to any surface (A) characterized in that it comprises:

— a central body (15) defining a pivot axis (4) standing substantially perpendicular to the said surface, which comprises two central shoe assemblies (19) that are adhesive to the said surface, the two assemblies being disposed substantially symmetrically with respect to the said pivot axis;

— first and second carriages (5a,5b), each having two assemblies of adhesive terminal shoes (11a,11'a,11b,11'b);

— first and second guide means (1a,1b) for rectilinear movement without rotation of the first and second carriages (5a,5b) in two directions substantially orthogonal to said pivot axis (4), the two assemblies of adhesive terminal shoes (11a,11'a,11b,11'b) associated to each respective carriage being symmetrically disposed relative to a plane on the one hand containing or parallel to the axis of rectilinear movement, and on the other hand containing the pivot axis, and connected to the said carriage by arms (10a,10'a,10b,10'b);

— displacing means (6a,7a,6b,7b) for independently moving said first and second carriages lengthways along said guide means;

— displacing means (MR) to provide relative pivoting movement (3) of said first and second guide means (1a,1b) around the pivot axis (4), the central shoe assemblies (19) being freely rotatable with respect to said body (15);

— means (100) for displacing said central shoe assemblies along said pivot axis;

— means (8a,8b) for conforming the position of said pairs of assemblies of terminal shoes to the said surface;

— command means for controlling the state of adhesion of said shoes to said surface; and

— command means for controlling the displacing means (6a,7a,6b,7b,MR) whereby the relative pivoting of one of said guide means (1a,1b) about the pivot axis (4) or the translational movement of one of said carriages (5a,5b) is only possible if the shoes associated with said carriage are not adhering to the said surface, and whereby translational displacement of the two carriages relative to said guide means is not possible unless only the central shoe assemblies are disengaged from the said surface.

2. Vehicle according to Claim 1 characterized in that said shoes (19,11a, 11'a,11b,11'b) comprise pneumatic or hydraulic suction cups.

3. Vehicle according to Claim 2 characterized in that each suction cup comprises a flared skirt (28) of elastic material having a closed base and a free rim constituting a deformable lip, a support member (31) disposed internally of the said skirt and unitary with said base, said member presenting towards said free rim a support surface (31') having a high coefficient of friction, and means (29) to evacuate the interior of said skirt.

4. Vehicle according to Claim 3 characterized in that said support surface (31') is spherical.

5. Vehicle according to Claim 1 characterized in that said shoes (19,11a, 11'a,11b,11'b) are electromagnetic units.

6. Vehicle according to any one of Claims 1 to 5 characterized in that said guide means for rectilinear movement comprise two tubes (1a,1b), a first end of each tube being mounted on a bearing (2a,2b) able to turn about said pivot axis (4) defined by the central body (15), the axes of the two tubes meeting said pivot axis at the same point, and that each carriage (5a,5b) is able to slide on the respective tube with which it is associated.

7. Vehicle according to Claim 6 characterized in that the two central shoe assemblies (19) are fixed to the end of two arms, themselves linked to the said central body by a cardan joint (17,18) whose two axes converge with said pivot axis (4).

8. Vehicle according to Claim 7 characterized in that means for producing displacement (20) of said central shoes according to said pivot axis comprise a first shaft (101) parallel to the rest direction of the guide means, and means (100) on said central body (15) for rotating said shaft around its longitudinal axis, a second shaft (106) parallel to the first and pivotably mounted around its longitudinal axis relative to said body, a ring (16) on which said two shoe assemblies are pivotably mounted about an axis (18) perpendicular to said shafts, two first connecting rod assemblies (103,108) at the ends of the first shaft (101) and the ends of one axis of the cardan (17) carried by said ring, parallel to said shafts and converging with said pivot axis, two second connecting rod assemblies (107,109) at the ends of the second shaft (106) and the ends of said cardan axis (17), and means (102,104,105) for transmitting from said first shaft to said second shaft, a rotational movement in a sense opposed to that of said first shaft.

9. Vehicle according to any one of Claims 6 to 8 characterized in that each terminal shoe assembly is pivotably mounted at the end of an arm (10a,10b) about a first axis (120a) orthoganol to the axis of the corresponding guide means, and in that the said arm is itself pivotably mounted with respect to the corresponding carriage about a second axis (21a) parallel to the first, and in that each carriage has means (126a,128a) to produce pivoting of the two arms associated therewith around the two second axes, and in that each arm has a connecting rod system (122a,124a) for maintaining each shoe assembly parallel to the axis of the guide means during pivoting of the said arm.

10. Vehicle according to any one of Claims 6 to 9 characterized in that each carriage has controllable means (8a,8b) for rotating said carriage about the axis of its respective associated tube.

11. Vehicle according to any one of Claims 6 to 10 characterized in that the first end of each tube is attached to the member forming its bearing through an articulation (32a,32b) providing relative movement around an axis orthoganol to the pivot axis (4), said articulation having means producing said movement.

12. Vehicle according to any one of Claims 1 to 5 characterized in that said guide means for rectilinear movement comprise two tube (1a,1b), a first end of each tube being able to slide in a member (2'a,2'b) constituting on the one hand a bearing able to pivot around said pivot axis defined by the central body, and, on the other hand, a guide for sliding of the said respective associated tube along an axis orthogonal to, but not intersecting, said pivot axis and the second end of each tube being non-rotatable with respect to the member forming a bearing.

13. Vehicle according to Claim 12 characterized in that each of the two central shoe assemblies (49) is mounted at one end of an arm whose other end is linked to the central body by an articulation around an axis (50) orthogonal to said pivot axis, each articulation being associated with controllable means for displacing the associated arm.

14. Vehicle according to either of Claims 12 and 13 characterized in that the arms on which the said terminal shoe assemblies (11a,11b) are mounted are articulated with reference to the corresponding carriage (5'a,5'b), around an axis parallel to the axis of the tube (1a,1b) associated with the said carriage, each articulation having controllable means (22a,22'a) for moving said arm.

FIG.1

0010034

0 010 034

**FIG.2**

**FIG.3**

FIG.4

# FIG. 5

FIG. 6a

FIG. 6b

FIG. 6c

0 010 034

FIG.7

136
134
138 130' 132'
132 130
140

FIG.8

29
30
31
28
31'
12
A

6

FIG.9a

FIG.9b

FIG.9c